# EUROPEAN PATENT SPECIFICATION

(11) **EP 3 636 955 B1**
(45) Date of publication and mention of the grant of the patent: **19.05.2021**
(21) Application number: 19202523.7
(22) Date of filing: 10.10.2019
(51) Int. Cl.: F16F 15/123, F16F 15/14

(54) **DAMPER DEVICE**
DÄMPFERVORRICHTUNG
DISPOSITIF D'AMORTISSEUR

(30) Priority: 10.10.2018 JP 2018191865
(43) Date of publication of application: 15.04.2020
(73) Proprietor: AISIN SEIKI KABUSHIKI KAISHA, Kariya-shi Aichi-ken, 448-8650 (JP)
(72) Inventor: KATAOKA, Naoya, KARIYA-SHI, AICHI-KEN, 448-8650 (JP)
(74) Representative: Cabinet Beau de Loménie

(56) References cited:
- WO-A2-2018/041294
- DE-A1-102012 213 472
- DE-A1-102015 211 135
- US-B2- 8 708 117

## Description

### TECHNICAL FIELD

The present disclosure relates to a damper device that absorbs fluctuation of a torque transmitted between a first rotating body and a second rotating body.

### BACKGROUND DISCUSSION

In a vehicle and the like, a damper device is provided on a power transmission path between a drive source such as an engine and a transmission to absorb vibrations of power transmitted from the drive source toward the transmission. The damper device is assembled, for example, in a clutch device.

In a general configuration of the damper device, a coil spring is interposed between a first rotating body (e.g., a disc plate) and a second rotating body (e.g., a hub) which are rotatable relative to each other, so as to absorb and attenuate vibrations in a torsional direction caused by torque fluctuation using elastic deformation thereof.

A hybrid vehicle using an engine and an electric motor as a drive source is known to generate greater noise or vibrations than a conventional vehicle using only an engine as a drive source because an inertial force due to the electric motor as a heavy object exists in the hybrid vehicle. Therefore, there is a demand for improved performance of a dry type damper device used in a hybrid vehicle.

As a method of improving the performance of the damper device, for example, a technology has been proposed in which an intermediate member is provided between an input member and an output member and a weight is disposed on the intermediate member. WO 2017/032370 A (Reference 1) discloses a damper device in which an intermediate member (reference numeral 15 in Reference 1) is provided between a disc plate (reference numeral 8 in Reference 1) to which power is input from a drive source such as an engine and hubs (reference numerals 11 and 12 in Reference 1) from which the power is output and a dynamic vibration absorber (reference numeral 5 in Reference 1) is connected to the intermediate member.

However, in the damper device described in Reference 1, since the dynamic vibration absorber is disposed at a position largely shifted in the axial direction with respect to the intermediate member (or the hubs), the damper device may have a problem in being mounted to a vehicle in the axial direction. Moreover, the damper device described in Reference 1 may also have a problem of stability since the dynamic vibration absorber which is a heavy object is disposed at a position shifted in the axial direction with respect to the hub which is an output member. Documents US8708117, DE102012213472 and DE102015211135 present other known structures of damper devices.

Thus, a need exists for a high-performance damper device which is advantageously mounted to a vehicle and has excellent stability.

### SUMMARY

A damper device according to an aspect of this disclosure is defined in the claims, and includes a first rotating body, a second rotating body configured to rotate coaxially with the first rotating body, a pair of intermediate members configured to rotate coaxially with the first rotating body and the second rotating body and disposed with the second rotating body interposed therebetween in an axial direction, an elastic mechanism including a first elastic body configured to elastically interconnect the first rotating body and at least one of the pair of intermediate members in a rotational direction and a second elastic body configured to elastically interconnect at least one of the pair of intermediate members and the second rotating body in the rotational direction, and a dynamic vibration absorber including a pair of mass bodies arranged with the pair of intermediate members interposed therebetween, and located at an outer side of the second rotating body in a radial direction.

With this configuration, since the pair of mass bodies in the dynamic vibration absorber are disposed on the surface of the intermediate member, compared to a conventional damper device, the entire damper device may have a compact axial length and may be advantageously mounted to a vehicle. In addition, since the dynamic vibration absorber is located at the outer side of the second rotating body in the radial direction (the dynamic vibration absorber and the second rotating body having substantially the same rotational plane in the axial direction), it is possible to provide a damper device which is capable of reducing the inclination thereof with respect to the center axis as a whole and has excellent stability.

In the damper device according to the aspect of this disclosure, it is preferable that an outer diameter of at least one of the pair of intermediate members is set larger than an outer diameter of the elastic mechanism, and the pair of mass bodies are disposed at a position facing an outer peripheral end of at least one of the pair of intermediate members.

With this configuration, the pair of mass bodies may be reliably arranged on the surfaces of the intermediate members.

In the damper device according to the aspect of this disclosure, it is preferable that at least one of the pair of intermediate members is supported by the second rotating body via a bush in any one or both of the axial direction and the radial direction.

With this configuration, the intermediate members may be reliably positioned in the axial direction and the radial direction, and the stability as the damper device may be improved.

In the damper device according to the aspect of this disclosure, it is preferable that the pair of intermediate members are integrally fixed at an inner side of a position facing the first elastic body or the second elastic body in the radial direction.

With this configuration, since the diameter of the intermediate member may be reduced, the entire damper device may be compact not only in the axial direction but also in the radial direction.

In the damper device according to the aspect, it is preferable that the elastic mechanism further includes a sheet member configured to support the first elastic body or the second elastic body, and the sheet member has a first groove configured to accommodate at least a portion of the second rotating body or a second groove configured to accommodate at least a portion of the pair of intermediate members.

With this configuration, it is possible to prevent the second rotating body and the intermediate members from being shifted in the axial direction and as a result, it is possible to prevent a power transmission loss.

In the damper device according to the aspect of this disclosure, it is preferable that the first rotating body has a take-out portion that protrudes at least one of the pair of intermediate members from an outer peripheral end of the first rotating body to an outer side in the radial direction.

With this configuration, the pair of mass bodies may be reliably arranged on the surfaces of the intermediate members.

In the damper device according to the aspect of this disclosure the first rotating body includes a pair of plate members and a spacer accommodated between the pair of plate members and having an outer diameter at a radial position where the dynamic vibration absorber is provided, and the spacer has a first stopper configured to restrict rotation of the second rotating body.

With this configuration, it is possible to efficiently prevent the first elastic body and the second elastic body from linearly coming into close contact with each other and to make the entire damper device compact in the radial direction.

According to various embodiments, it is possible to provide a high-performance damper device which is advantageously mounted to a vehicle and has excellent stability.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic top view schematically illustrating a configuration of a damper device according to an embodiment;
Fig. 2 is a schematic cross-sectional view schematically illustrating the configuration of the damper device illustrated in Fig. 1 as viewed from line A-A;
Fig. 3 is a schematic exploded perspective view illustrating a configuration of respective components of the damper device according to the embodiment;
Fig. 4 is a schematic top view schematically illustrating a configuration in which a disc plate is removed from the configuration of the damper device illustrated in Fig. 1;
Fig. 5A is a schematic top view schematically illustrating a configuration of the damper device in a state where the damper device illustrated in Fig. 1 is operated and a disc plate, a hub, and an intermediate member are rotated;
Fig. 5B is a schematic top view schematically illustrating a configuration in which a disc plate is removed from the configuration of the damper device illustrated in Fig. 5A;
Fig. 6A is a schematic top view schematically illustrating a configuration of a damper device according to another embodiment; and
Fig. 6B is a schematic top view schematically illustrating a configuration of the damper device in a state where the damper device illustrated in Fig. 6A is operated and a disc plate, a hub, and an intermediate member are rotated.

### DETAILED DESCRIPTION

Hereinafter, various embodiments disclosed here will be described with reference to the accompanying drawings. In addition, the same reference numerals will be given to common components throughout the drawings. Further, it should be noted that components represented in any one drawing may be omitted in other drawings for convenience of explanation. Furthermore, it should be noted that the accompanying drawings are not necessarily drawn to scale.

### 1. Configuration of Damper Device

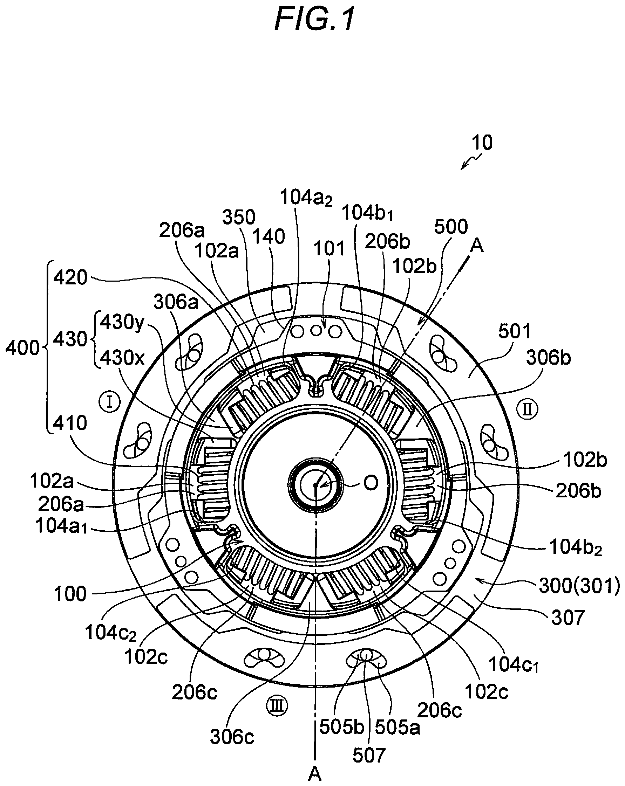

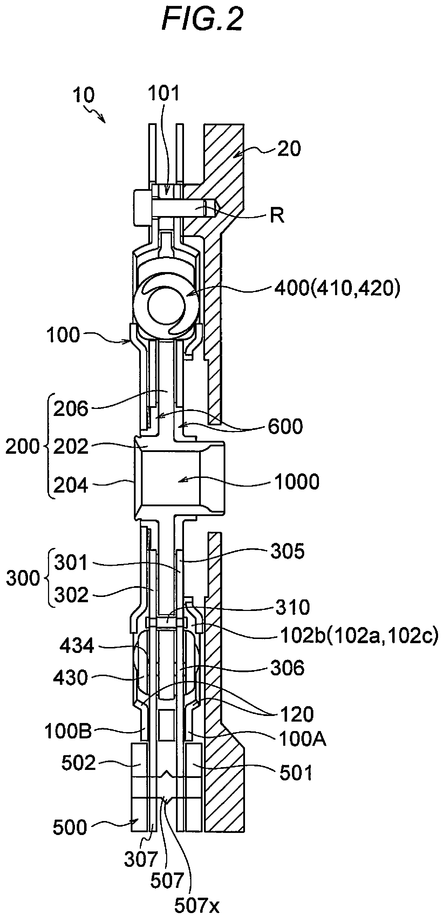

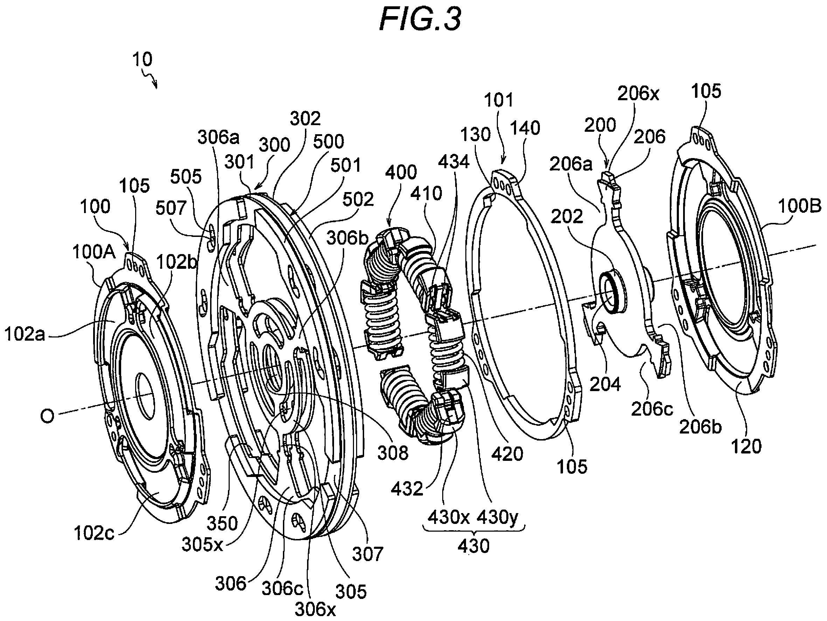

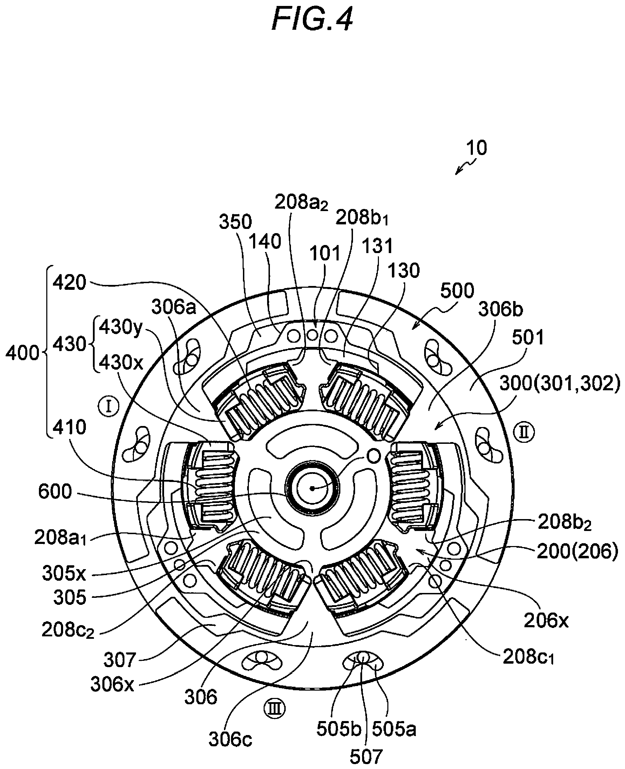

An outline of an overall configuration of a damper device according to an embodiment will be described with reference to Figs. 1 to 4. Fig. 1 is a schematic top view schematically illustrating a configuration of a damper device 10 according to an embodiment. Fig. 2 is a schematic cross-sectional view schematically illustrating the configuration of the damper device 10 illustrated in Fig. 1 as viewed from line A-A. Fig. 3 is a schematic exploded perspective view illustrating a configuration of respective components of the damper device 10 according to the embodiment. Fig. 4 is a schematic top view schematically illustrating a configuration in which a disc plate 100 is removed from the configuration of the damper device 10 illustrated in Fig. 1.

The damper device 10 according to the embodiment is fitted and pressed between a flywheel 20 and a pressure plate (not illustrated), thereby transmitting a drive force from a drive source such as an engine or a motor to a transmission. A structure for fitting and pressing the damper device 10 between the flywheel 20 and the pressure plate is known and thus, a detailed description thereof will be omitted.

The damper device 10 absorbs and attenuates torque vibrations. As illustrated in Figs. 1 to 4, the damper device 10 mainly includes a disc plate 100 as a first rotating body, a hub 200 as a second rotating body, an intermediate member 300, an elastic mechanism 400 including a first elastic body 410 and a second elastic body 420, and a dynamic vibration absorber 500.

### 1-1. Hub 200

The hub 200 is formed of, for example, a metal material, has a shape in which it extends in a substantially annular shape as a whole, and is rotatably provided around a center axis O. As illustrated in Figs. 2 and 3, an input shaft 1000 of the transmission may be inserted through and spline-coupled to a through-hole 204 formed in a substantially cylindrical portion 202 of the hub 200. Further, the hub 200 has a substantially annular flange 206 extending in the radial direction from the cylindrical portion 202. In addition, the hub 200 may adopt a configuration in which the cylindrical portion 202 and the flange 206 are integrated with each other or a configuration in which the cylindrical portion 202 and the flange 206 are separated from each other and a minute spring is disposed therebetween.

The flange 206 has at least one notch formed in the outer periphery thereof along the circumferential direction. In an embodiment, as an example, the flange 206 has three notches 206a, 206b and 206c in the outer periphery thereof at an equal interval along the circumferential direction (an interval of 120 degrees in the circumferential direction). As illustrated in Fig. 1, when conceptually dividing the damper device 10 into three areas I, II and III each having a fan shape as viewed from the top, the flange 206 has a first notch 206a, a second notch 206b, and a third notch 206c formed respectively in association with the corresponding areas I to III. In addition, the number of notches is not limited to three and is formed so as to correspond to a configuration of the elastic mechanism 400 to be described later, more specifically, the number of elastic units each including a set of the first elastic body 410 and the second elastic body 420.

By forming these notches, the first notch 206a, the second notch 206b, and the third notch 206c may accommodate the elastic mechanism 400 to be described later. The flange 206 has an one end side engaging portion (first one end side engaging portion) 208a₁ and the other end side engaging portion (first other end side engaging portion) 208a₂ facing each other in association with the area I, an one end side engaging portion (second one end side engaging portion) 208b₁ and the other end side engaging portion (second other end side engaging portion) 208b₂ facing each other in association with the area II, and an one end side engaging portion (third one end side engaging portion) 208c₁ and the other end side engaging portion (third other end side engaging portion) 208c₂ facing each other in association with the area III.

The respective one end side engaging portions 208a₁, 208b₁ and 208c₁ may have the same configuration, and the respective other end side engaging portions 208a₂, 208b₂ and 208c₂ may have the same configuration. The respective one end side engaging portions 208a₁, 208b₁ and 208c₁ may have a horizontally symmetrical configuration with the respective other end side engaging portions 208a₂, 208b₂ and 208c₂.

### 1-2. Disc Plate 100

The disc plate 100 on the input side of a power transmission path is formed of, for example, a metal material, and as illustrated in Figs. 1 to 3, is coaxially rotatable relative to the hub 200 around the center axis O by interposing the intermediate member 300 to be described later between the disc plate 100 and the hub 200. The disc plate 100 includes a first disc plate 100A and a second disc plate 100B as a pair of plate members provided on both sides in the axial direction of the hub 200 and the intermediate member 300 to be described later. The first disc plate 100A and the second disc plate 100B have a symmetrical shape in the axial direction, and are coupled to each other using a plurality of rivets R and the like fastened in through-holes 105 in the vicinity of the outer peripheries thereof by interposing a spacer 101 capable of appropriately adjusting axial positions of the disc plates 100A and 100B therebetween.

The first disc plate 100A and the second disc plate 100B have a shape in which it swells in the axial direction of the disc plate 100 so as to form an accommodating area (in an example illustrated in Fig. 1, three accommodating areas) which accommodates the elastic mechanism 400 in cooperation with each other so that the accommodating area corresponds to and is associated with each of the areas I, II and III. Each accommodating area extends in a substantially linear shape or in a substantially arc shape along the circumferential direction of the disc plate 100 in order to accommodate the first elastic body 410 and the second elastic body 420 which extend along the circumferential direction of the disc plate 100.

To provide a detailed description with reference to Figs. 1 and 3, each of the first disc plate 100A and the second disc plate 100B forms a first accommodating area 102a, a second accommodating area 102b, and a third accommodating area 102c which extend along the circumferential direction in association with the corresponding areas I to III. In addition, the first accommodating area 102a is formed so as to correspond to the above-described first notch 206a, the second accommodating area 102b is formed so as to correspond to the above-described second notch 206b, and the third accommodating area 102c is formed so as to correspond to the above-described third notch 206c (the number of accommodating areas also corresponding to the number of notches formed in the hub 200).

Focusing on the area I, as illustrated in Figs. 1 and 2, the first disc plate 100A and the second disc plate 100B include, as a sidewall surrounding the first accommodating area 102a, one end surface (first one end surface) 104a₁ and the other end surface (first other end surface) 104a₂ facing each other. The first one end surface 104a₁ and the first other end surface 104a₂ extend along the axial direction of the disc plate 100 as an example.

Similarly, focusing on the area II, the first disc plate 100A and the second disc plate 100B include, as a sidewall surrounding the second accommodating area 102b, one end surface (second one end surface) 104b₁ and the other end surface (second other end surface) 104b₂ facing each other, and focusing on the area III, the first disc plate 100A and the second disc plate 100B include, as a sidewall surrounding the third accommodating area 102c, one end surface (third one end surface) 104c₁ and the other end surface (third other end surface) 104c₂ facing each other.

However, to allow the first one end side engaging portion 208a₁ of the flange 206 of the hub 200 to be introduced to the inside of the first accommodating area 102a, a gap G (not illustrated) is formed between the first one end surface 104a₁ formed by the first disc plate 100A and the first one end surface 104a₁ formed by the second disc plate 100B for receiving the first one end side engaging portion 208a₁. Further, to allow the first other end side engaging portion 208a₂ to be introduced to the inside of the first accommodating area 102a, similarly, a gap G (not illustrated) is formed between the first other end surface 104a₂ formed by the first disc plate 100A and the first other end surface 104a₂ formed by the second disc plate 100B for receiving the first other end side engaging portion 208a₂. These structures are also similarly formed in the areas II and III.

Further, as illustrated in Figs. 2 and 3, the first disc plate 100A and the second disc plate 100B have a take-out portion 120 which protrudes the intermediate member 300 to be described later from the outer peripheral end thereof to an outer side in the radial direction. The shape of the take-out portion 120 is not particularly limited as long as it has a mouth-open shape (an axially recessed shape) in the radial direction.

Further, as illustrated in Figs. 3 and 4, in order to prevent the first elastic body 410 and the second elastic body 420 of the elastic mechanism 400 to be described later from being excessively compressed and linearly coming into close contact with each other when the hub 200 rotates excessively relative to the disc plate 100, the disc plate 100 (more specifically, the spacer 101) is provided with a first stopper 130 which prevents excessive relative rotation of the hub 200.

The shape of the first stopper 130 is not particularly limited as long as it is capable of preventing excessive relative rotation of the hub 200. However, it is possible to adopt, for example, a configuration in which a notch 131 capable of accommodating a tip end portion 206x of the flange 206 of the hub 200 is formed in the inner diameter side of the spacer 101 so that a sidewall of the notch 131 forms the first stopper 130.

Moreover, as illustrated in Figs. 1, 3, and 4, in order to prevent the first elastic body 410 and the second elastic body 420 from linearly coming into close contact with each other as described above when the intermediate member 300 to be described later rotates excessively relative to the disc plate 100, the disc plate 100 (more specifically, the spacer 101) is provided with a second stopper 140 which prevents excessive relative rotation of the intermediate member 300.

The shape of the second stopper 140 is not particularly limited as long as it is capable of preventing excessive relative rotation of the intermediate member 300. However, it is possible to adopt, for example, a configuration in which a protrusion capable of being accommodated in a notch 350 formed in the intermediate member 300 is formed on the disc plate (more specifically, formed radially outward on the outer diameter side of the spacer 101), and the protrusion is used as the second stopper 140.

### 1-3. Intermediate Member 300

The intermediate member 300 is formed of, for example, a metal material, and as illustrated in Figs. 1 to 4, is coaxially rotatable relative to the disc plate 100 and the hub 200 around the center axis O with the hub 200 interposed therebetween in the axial direction. The intermediate member 300 includes a first intermediate plate 301 and a second intermediate plate 302 as a pair of plate members provided on both sides in the axial direction of the hub 200. The first intermediate plate 301 and the second intermediate plate 302 have the same shape, and are integrally and rotatably fixed by a fixing unit such as a fastening pin 310. Further, the first intermediate plate 301 and the second intermediate plate 302 may have different shapes. For example, based on a difference between rotational inertial masses of the first disc plate 100A and the second disc plate 100B, the first intermediate plate 301 may be shaped so as to be larger (or smaller) than the second intermediate plate 302, so that the rotational inertial mass of the first intermediate plate 301 increases (or decreases). Thus, the entire damper device 10 may be improved in the balance of the rotational inertia mass and may be reduced in the inclination thereof with respect to the rotation center O.

As illustrated in Fig. 2, the first intermediate plate 301 and the second intermediate plate 302 may be integrally fixed at a radially inner side of a position thereof facing the first elastic body 410 or the second elastic body 420 of the elastic mechanism 400 to be described later. Thus, since the diameter of the intermediate member 300 may be reduced, the entire damper device 10 may have a compact size in the radial direction. Meanwhile, even when the first intermediate plate 301 and the second intermediate plate 302 are integrally fixed at a radially outer side of the position facing the first elastic body 410 or the second elastic body 420 at the expense of a reduction in the diameter of the intermediate member 300, the parallelism between the first intermediate plate 301 and the second intermediate plate 302 is improved since the fixing position is away from the rotation center. Therefore, it is possible to reduce sliding of the intermediate member 300 with respect to the axially adjacent disc plate 100 and as a result, it is possible to prevent wear of the first intermediate plate 301 and the second intermediate plate 302.

As illustrated in Figs. 3 and 4, each of the first intermediate plate 301 and the second intermediate plate 302 includes a disc-shaped inner circle portion 305, an annular outer ring portion 307, and a connection portion 306 interconnecting the inner circle portion 305 and the outer ring portion 307.

As illustrated in Figs. 2 and 3, the inner circle portion 305 is provided with an insertion through-hole 308 through which a stepped bush 600 mounted to the outer peripheral side of the cylindrical portion 202 of the hub 200 and the hub 200 may be inserted. Thus, the first intermediate plate 301 and the second intermediate plate 302 are axially supported by the hub 200 via the bush 600 by connecting the inner circle portion 305 to the bush 600, thereby being reliably positioned in the axial direction and the radial direction. Thus, since the first intermediate plate 301 and the second intermediate plate 302 are prevented from being position-shifted in the axial direction and the radial direction, the stability of the damper device 10 is improved (i.e., power transmission loss being prevented). Further, only one of the first intermediate plate 301 and the second intermediate plate 302 may be configured so as to be axially supported by the hub 200. Thus, the rotational inertial mass of the pair of intermediate members 300 may be reduced. Further, the first intermediate plate 301 and the second intermediate plate 302 may be supported only in any one of the axial direction and the radial direction. Thus, assembly efficiency may be improved.

Further, as illustrated in Figs. 3 and 4, the inner circle portion 305 has an escape hole 305x formed along the circumferential direction of the inner circle portion 305 to release a centrifugal force (stress) applied to the connection portion 306 (particularly, a narrowed portion 306x of the connection portion 306). The shape of the escape hole is not particularly limited. However, it is possible to adopt a substantially arc shape along the circumferential direction of the inner circle portion 305. In addition, the escape hole 305x is not formed on a straight line which interconnects the rotation center of the first intermediate plate 301 and the connection portion 306, so that the centrifugal force applied to the connection portion 306 may be released more efficiently.

As illustrated in Figs. 3 and 4, the connection portion 306 extends radially outward from the outer peripheral end of the inner circle portion 305 to interconnect the inner circle portion 305 and the outer ring portion 307. The connection portion 306 includes, in association with the corresponding areas I to III, a first connection portion 306a which corresponds to the first notch 206a formed in the hub 200 and the first accommodating area 102a formed in the disc plate 100, a second connection portion 306b which corresponds to the second notch 206b formed in the hub 200 and the second accommodating area 102b formed in the disc plate 100, and a third connection portion 306c which corresponds to the third notch 206c formed in the hub 200 and the third accommodating area 102c formed in the disc plate 100.

The first connection portion 306a is accommodated between the first elastic body 410 and the second elastic body 420 of the elastic mechanism 400 and is engaged with each of a sheet member 430x supporting the first elastic body 410 and a sheet member 430y supporting the second elastic body 420. Similarly to the first connection portion 306a, the second connection portion 306b and the third connection portion 306c are also engaged with the sheet member 430x and the sheet member 430y. In addition, details of an engagement structure between the first connection portion 306a (and the second connection portion 306b and the third connection portion 306c) and the sheet members 430x and 430y will be described later.

The outer ring portion 307 defines the outer diameter of the intermediate member 300 and is provided to support the dynamic vibration absorber 500 to be described later. Since the intermediate member 300 includes the outer ring portion 307 so that the outer diameter thereof is set larger than the outer diameter of the elastic mechanism 400 as illustrated in Figs. 3 and 4, it is possible to reliably dispose the dynamic vibration absorber 500 at a position facing the outer ring portion 307 (the outer peripheral end of the intermediate member 300) without interfering with other components. Thus, the entire damper device 10 may have a compact axial length, and may be advantageously mounted to a vehicle. Further, since the dynamic vibration absorber 500 is located at a radially outer side of the hub 200 (intermediate member 300) (since the dynamic vibration absorber 500 and the hub 200 have substantially the same rotational plane in the axial direction), the inclination of the damper device 10 with respect to the center axis O is reduced and the stability of the damper device 10 is improved.

In addition, as described above, the outer ring portion 307 is formed with the notch 350 which may accommodate the second stopper 140.

### 1-4. Elastic Mechanism 400

The elastic mechanism 400 is mainly composed of the first elastic body 410 adopting a coil spring, the second elastic body 420 adopting a coil spring, and sheet members 430 (the sheet member 430x and the sheet member 430y) supporting the first elastic body 410 or the second elastic body 420. As illustrated in Figs. 1, 3, and 4, the first elastic body 410 and the second elastic body 420 are arranged one by one in series in the circumferential direction to form a set of elastic units. In addition, in the embodiment illustrated in Figs. 1, 3, and 4, it is assumed that a positive torque is transmitted clockwise from the drive source such as an engine or a motor, and the first elastic body 410 and the second elastic body 420 of each elastic unit are arranged in this order (the order in which the second elastic body 420 is located near the right side of the first elastic body 410 in the rotational direction). When the positive torque is transmitted counterclockwise, the first elastic body 410 and the second elastic body 420 of each elastic unit are arranged such that the second elastic body 420 is located near the left side of the first elastic body 410 in the rotational direction.

Then, in the embodiment illustrated in Figs. 1 to 4, as an example, since the disc plate 100 is provided with three accommodating areas, i.e., the first accommodating area 102a to the third accommodating area 102c (the hub 200 being provided with three notches, i.e., the first notch 206a to the third notch 206c), one elastic unit (including one first elastic body 410 and one second elastic body 420) is accommodated in each of the three accommodating areas, i.e., in association with the respective corresponding areas I to III. In addition, in each of the areas I to III, both ends of the first elastic body 410 are supported by a pair of sheet members 430x and both ends of the second elastic body 420 are supported by a pair of sheet members 430y. Thus, the elastic mechanism 400 is disposed to have an annular shape as a whole by three elastic units and the sheet members 430.

Here, focusing on the area I, one of the sheet members 430x supporting the first elastic body 410 is engaged with the first end surface 104a₁ formed on the disc plate 100 and the first one end side engaging portion 208a₁ formed on the hub 200. In addition, the other one of the sheet members 430x supporting the first elastic body 410 is engaged with the first connection portion 306a of the intermediate member 300.

In addition, as illustrated in Fig. 3, a first groove 432 is formed in one of the sheet members 430x and the first one end side engaging portion 208a₁ formed on the hub 200 is accommodated in the first groove 432 so that one of the sheet members 430x and the hub 200 may be engaged with each other. Further, a second groove 434 is formed in the other one of the sheet members 430x and the first connection portion 306a of the intermediate member 300 is accommodated in the second groove 434 so that the other one of the sheet members 430x and the intermediate member 300 may be engaged with each other.

Moreover, one of the sheet members 430y supporting the second elastic body 420 is engaged with the first connection portion 306a of the intermediate member 300, and the other one of the sheet members 430y supporting the second elastic body 420 is engaged with each of the first other end surface 104a₂ formed on the disc plate 100 and the first other end side engaging portion 208a₂ formed on the hub 200.

In addition, as illustrated in Fig. 3, the second groove 434 is formed in one of the sheet members 430y and the first connection portion 306a of the intermediate member 300 is accommodated in the second groove 434 so that one of the sheet members 430y may be engaged with the intermediate member 300. Further, the first groove 432 is formed in the other one of the sheet members 430y and the first other end side engaging portion 208a₂ formed on the hub 200 is accommodated in the first groove 432 so that the other one of the sheet members 430y may be engaged with the hub 200.

Similarly, focusing on the area II, one of the sheet members 430x supporting the first elastic body 410 is engaged with each of the second one end surface 104b₁ formed on the disc plate 100 and the second one end side engaging portion 208b₁ formed on the hub 200. In addition, the other one of the sheet members 430x supporting the first elastic body 410 is engaged with the second connection portion 306b of the intermediate member 300. Moreover, one of the sheet members 430y supporting the second elastic body 420 is engaged with the second connection portion 306b of the intermediate member 300 and the other one of the sheet members 430y supporting the second elastic body 420 is engaged with each of the second other end surface 104b₂ formed on the disc plate 100 and the second other end side engaging portion 208b₂ formed on the hub 200. In addition, the sheet members 430x and the sheet members 430y are formed respectively with the first groove 432 and the second groove 434 as in the area I.

Similarly, focusing on the area III, one of the sheet members 430x supporting the first elastic body 410 is engaged with each of the third one end surface 104c₁ formed on the disc plate 100 and the third one end side engaging portion 208c₁ formed on the hub 200. In addition, the other one of the sheet members 430x supporting the first elastic body 410 is engaged with the third connection portion 306c of the intermediate member 300. Moreover, one of the sheet members 430y supporting the second elastic body 420 is engaged with the third connection portion 306c of the intermediate member 300 and the other one of the sheet members 430y supporting the second elastic body 420 is engaged with each of the third other end surface 104c₂ formed on the disc plate 100 and the third other end side engaging portion 208c₂ formed on the hub 200. In addition, the sheet members 430x and the sheet members 430y are formed respectively with the first groove 432 and the second groove 434 as in the area I.

Each elastic unit having the above configuration accommodates the intermediate member 300 (the first connection portion 306a to the third connection portion 306c) between the first elastic body 410 and the second elastic body 420. More precisely, the intermediate member 300 is accommodated between the sheet members 430x and the sheet members 430y.

With the above configuration, the first elastic body 410 may elastically interconnect the disc plate 100 and the intermediate member 300 in the rotational direction (clockwise rotational direction) via the sheet members 430x, and the second elastic body 420 may elastically interconnect the intermediate member 300 and the hub 200 via the sheet members 430y. That is, power from the drive source such as an engine or a motor is transmitted in the order of the disc plate 100, one sheet member 430x, the first elastic body 410, the other sheet member 430x, the intermediate member 300, one sheet member 430y, the second elastic body 420, the other sheet member 430y, and the hub 200.

### 1-5. Dynamic Vibration Absorber 500

As illustrated in Figs. 1 to 4, roughly speaking, the dynamic vibration absorber 500 may adopt a generally known centrifugal pendulum type configuration which mainly includes a pair of mass bodies (a first mass body 501 and a second mass body 502) as weights mounted to a pair of intermediate members 300 (the first intermediate plate 301 and the second intermediate plate 302), a rolling hole 505a formed in each mass body, and a rolling shaft 507 formed in the rolling hole 505a.

More specifically, as illustrated in Figs. 1 to 4, the plate-shaped first mass body 501 and the plate-shaped second mass body 502 are paired together, and are disposed on the surface of the intermediate member 300, more particularly, at a position facing the outer peripheral end of the outer ring portion 307 with both the first intermediate plate 301 and the second intermediate plate 202 interposed therebetween. That is, the first mass body 501 is disposed at a position facing the outer peripheral end of the outer ring portion 307 of the first intermediate plate 301, and the second mass body 502 is disposed at a position facing the outer peripheral end of the outer ring portion 307 of the second intermediate plate 302. Moreover, the first mass body 501 and the second mass body 502 are respectively provided with the rolling holes 505a, and the rolling shaft 507 is set so as to penetrate the two rolling holes 505a.

In addition, the first intermediate plate 301 supporting the first mass body 501 and the second intermediate plate 302 supporting the second mass body 502 are formed respectively with through-holes 505b which allow the rolling shaft 507 to pass from the rolling hole 505a formed in the first mass body 501 to the rolling hole 505b formed in the second mass body 502. In addition, the shape of the through-hole 505b is designed so as to correspond to the shape of the rolling hole 505a to be described later. For example, as will be described later, when the rolling hole 505a adopts a shape in which it extends in a curved shape to swell toward the rotation center O of the intermediate member 300 (e.g., in Fig. 1, a substantially convex shape in the upward direction on the paper surface), the through-hole 505b may also adopt a shape extending in a curved shape (most preferably, an arc shape or a substantially arc shape) to swell radially outward of the intermediate member 300 (e.g., in Fig. 1, a substantially convex shape in the downward direction on the paper surface).

The first mass body 501 and the second mass body 502 have the same shape, and are not particularly limited as to the shape thereof, but, as illustrated in Figs. 1 to 4, may adopt a substantially arc shape along the shape (outer periphery) of the outer ring portion 307 of the intermediate member 300 so as not to increase the outer diameter of the damper device 10.

The number of rolling holes 505a formed in the first mass body 501 and the second mass body 502 is not particularly limited, but two or more rolling holes 505a may be symmetrically formed along the circumferential direction about the center in the circumferential direction of the first mass body 501 in consideration of weight balance, as illustrated in Fig. 1, 3 and 4. In addition, the rolling hole 505a may adopt a shape in which it may accommodate the rolling shaft 507 and extends in a curved shape (most preferably, an arc shape or a substantially arc shape) to swell toward the rotation center O of the intermediate member 300 (e.g., in Fig. 1, a substantially convex shape in the upward direction on the paper surface). In addition, the number of rolling holes 505a formed in the first mass body 501 and the number of rolling holes 505a formed in the second mass body 502 are the same.

As illustrated in Fig. 2, the rolling shaft 507 may have a middle thickness portion 507x near the center position as viewed in the axial direction so as to maintain a state where the rolling shaft 507 is disposed through the rolling holes 505a and the through-holes 505b.

By the way, assuming that one dynamic vibration absorption unit is composed of one first mass body 501, one second mass body 502, the rolling holes 505a, and the rolling shaft 507, the dynamic vibration absorber 500 in the embodiment includes three dynamic vibration absorption units so as to correspond to the areas I to III. In addition, each dynamic vibration absorption unit may be provided at the same diameter position as the outer diameter of the spacer 101 (the radial position where the rivet R described above is provided) about the rotation center O as a reference. In other words, the spacer 101 having an outer diameter at the radial position where each dynamic vibration absorption unit is provided may be provided. Thus, the diameter of the intermediate member 300 may be reduced, and the entire damper device 10 may be compact in the radial direction.

Since the dynamic vibration absorber 500 having the above configuration is located at a radially outer side of the hub 200 in terms of a positional relationship with the hub 200 (more specifically, the rolling shaft 507 interconnecting the first mass body 501 and the second mass body 502 being located at a radially outer side of the hub 200 so that the dynamic vibration absorber 500 and the hub 200 have substantially the same rotational plane in the axial direction), compared to a conventional damper device, the damper device 10 according to the embodiment may have a compact axial length, and may have excellent stability to reduce the inclination thereof with respect to the rotation center O as a whole.

### 2. Operation of Damper Device

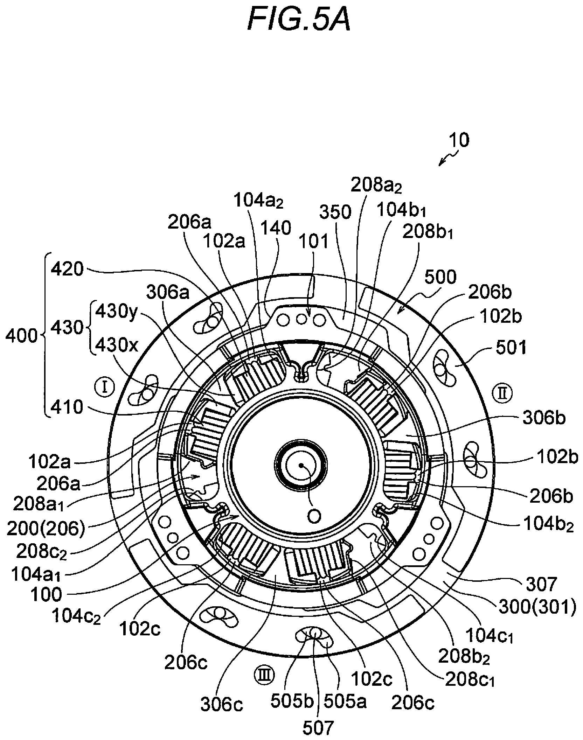

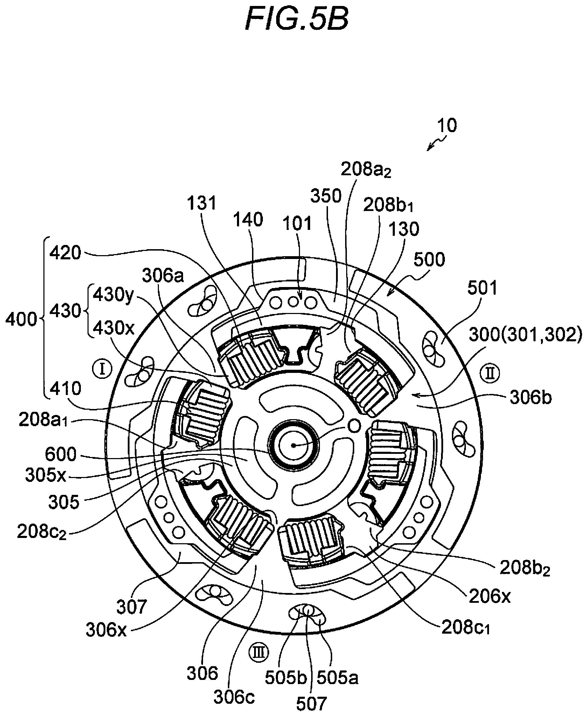

Next, an operation of the damper device 10 having the above configuration will be described with reference to Figs. 1, 4, 5A and 5B. Fig. 5A is a schematic top view schematically illustrating a configuration of the damper device 10 in a state where the damper device 10 illustrated in Fig. 1 is operated and the disc plate 100, the hub 200, and the intermediate member 300 are rotated. Fig. 5B is a schematic top view schematically illustrating a configuration in which the disc plate 100 is removed from the configuration of the damper device 10 illustrated in Fig. 5A.

The damper device 10 illustrated in Figs. 1 and 4 is in a state where the drive force from the drive source such as an engine or a motor is not transmitted (initial state). Meanwhile, the damper device 10 illustrated in Figs. 5A and 5B is in a state where the damper device 10 is operated upon receiving the drive force applied thereto (operating state).

As described above, power from the drive source such as an engine or a motor is transmitted, as described above, in the order of the disc plate 100, one sheet member 430x, the first elastic body 410, the other sheet member 430x, the intermediate member 300, one sheet member 430y, the second elastic body 420, the other sheet member 430y, and the hub 200. Focusing on the area I, power is transmitted from the first one end surface 104a₁ formed on the disc plate 100 to one sheet member 430x, and one sheet member 430x transmits the power to the other sheet member 430x while bending the first elastic body 410. Moreover, the other sheet member 430x transmits the applied power to the first connection portion 306a of the intermediate member 300. The first connection portion 306a transmits the applied power to the other sheet member 430y via one sheet member 430y while bending the second elastic body 420. Then, finally, the power is transmitted from the other sheet member 430y to the hub 200 so as to be applied to the hub 200.

In the areas II and III, power is similarly transmitted by an operation of the respective components.

In such a power transmission path, each of the hub 200 and the intermediate member 300 rotate relative to the disc plate 100. More specifically, as illustrated in Figs. 5A and 5B, based on a rotational phase difference with the disc plate 100, the hub 200 and the intermediate member 300 rotate in the same rotational direction (clockwise in the embodiment) as power transmission relative to the disc plate 100. In this case, as described above, the first stopper 130 and the second stopper 140 are provided to prevent the hub 200 and the intermediate member 300 from being excessively rotated relative to the disc plate 100. In Figs. 5A and 5B, excessive relative rotation of the hub 200 and the intermediate member 300 is prevented by both the stoppers.

### 3. Configuration and Operation of Damper Device according to Another Embodiment

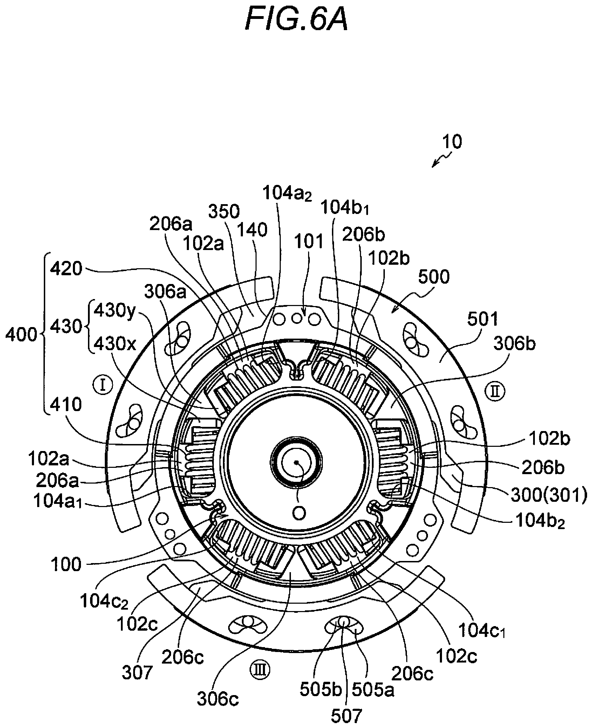

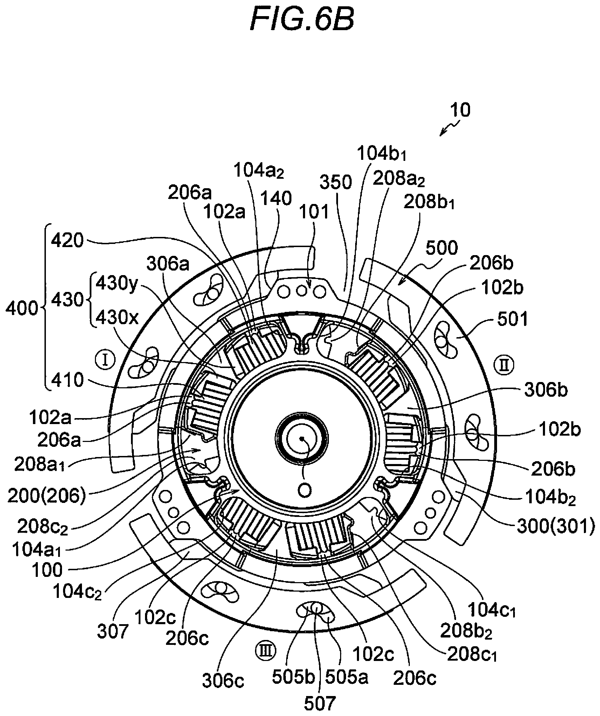

Next, a configuration and operation of the damper device 10 according to another embodiment will be described with reference to Figs. 6A and 6B. Fig. 6A is a schematic top view schematically illustrating a configuration of the damper device 10 according to another embodiment. Fig. 6B is a schematic top view schematically illustrating a configuration of the damper device 10 in a state where the damper device 10 illustrated in Fig. 6A is operated and the disc plate 100, the hub 200, and the intermediate member 300 are rotated. In addition, since a configuration and operation of the damper device 10 according to another embodiment are substantially in common with those of the damper device 10 according to the embodiment described with reference to Figs. 1 to 5B, a detailed description of the common configuration and operation will be omitted.

Unlike the above-described embodiment, the damper device 10 according to another embodiment is formed such that the outer ring portion 307 of the intermediate member 300 is not continuous in the circumferential direction and exists only at positions corresponding to the areas I to III. Thus, the entire damper device 10 may reduce a rotational inertial mass thereof, thereby preventing a power transmission loss from the drive source to the transmission or improving the followability to an increase or decrease in the transmitted power.

Since an operation of the damper device 10 according to another embodiment is the same as the operation of the damper device 10 according to the above embodiment, a detailed description thereof will be omitted. That is, an operation of the damper device 10 according to Fig. 6B is the same as an operation in Fig. 5A (and Fig. 5B).

As described above, various embodiments have been illustrated, but the above embodiments are merely examples and are not intended to limit the scope of the disclosure. The above embodiments may be implemented in various other forms, and various omissions, substitutions, and changes may be made without departing from the scope of the disclosure. Each configuration, shape, size, length, width, thickness, height, number, and the like may be changed and implemented as appropriate.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the scope of the present invention. Accordingly, it is expressly intended that all such variations, changes and equivalents which fall within the scope of the present invention as defined in the claims, be embraced thereby.

## Claims

1. A damper device (10) comprising:
a first rotating body (100);
a second rotating body (200) configured to rotate coaxially with the first rotating body (100);
a pair of intermediate members (300) configured to rotate coaxially with the first rotating body (100) and the second rotating body (200) and disposed with the second rotating body (200) interposed therebetween in an axial direction;
an elastic mechanism (400) including a first elastic body (410) configured to elastically interconnect the first rotating body (100) and at least one of the pair of intermediate members (300) in a rotational direction and a second elastic body (420) configured to elastically interconnect at least one of the pair of intermediate members (300) and the second rotating body (200) in the rotational direction; and
a dynamic vibration absorber (500) including a pair of mass bodies (501, 502) arranged with the pair of intermediate members (300) interposed therebetween, and located at an outer side of the second rotating body (200) in a radial direction,
the damper device being **characterized in that** the first rotating body (100) includes a pair of plate members (100A, 100B) and a spacer (101) accommodated between the pair of plate members (100A, 100B) and having an outer diameter at a radial position where the dynamic vibration absorber (500) is provided, and
the spacer (101) has a first stopper (130) configured to restrict rotation of the second rotating body (200).

2. The damper device (10) according to claim 1, wherein
an outer diameter of at least one of the pair of intermediate members (300) is set larger than an outer diameter of the elastic mechanism (400), and
the pair of mass bodies (501, 502) are disposed at a position facing an outer peripheral end of at least one of the pair of intermediate members (300).

3. The damper device (10) according to claim 1 or 2, wherein
at least one of the pair of intermediate members (300) is supported by the second rotating body (200) via a bush (600) in any one or both of the axial direction and the radial direction.

4. The damper device (10) according to any one of claims 1 to 3, wherein
the pair of intermediate members (300) are integrally fixed at an inner side of a position facing the first elastic body (410) or the second elastic body (420) in the radial direction.

5. The damper device (10) according to any one of claims 1 to 4, wherein
the elastic mechanism further includes a sheet member (430, 430x, 430y) configured to support the first elastic body (410) or the second elastic body (420), and
the sheet member (430, 430x, 430y) has a first groove (432) configured to accommodate at least a portion of the second rotating body (200) or a second groove (434) configured to accommodate at least a portion of at least one of the pair of intermediate members (300).

6. The damper device (10) according to any one of claims 1 to 5, wherein
the first rotating body (100) has a take-out portion (120) that protrudes at least one of the pair of intermediate members (300) from an outer peripheral end of the first rotating body (100) to an outer side in the radial direction.

## Patentansprüche

1. Dämpfervorrichtung (10), umfassend:
einen ersten Rotationskörper (100),
einen zweiten Rotationskörper (200), der dazu ausgebildet ist, sich koaxial zu dem ersten Rotationskörper (100) zu drehen,
ein Paar von Zwischengliedern (300), die dazu ausgebildet sind, sich koaxial zu dem ersten Rotationskörper (100) und dem zweiten Rotationskörper (200) zu drehen, und mit dem zweiten Rotationskörper (200) in einer axialen Richtung dazwischen positioniert angeordnet sind,
einen elastischen Mechanismus (400), umfassend einen ersten elastischen Körper (410), der dazu ausgebildet ist, den ersten Rotationskörper (100) und mindestens eines von dem Paar von Zwischengliedern (300) in einer Rotationsrichtung elastisch miteinander zu verbinden, und einen zweiten elastischen Körper (420), der dazu ausgebildet ist, mindestens eines von dem Paar von Zwischengliedern (300) und den zweiten Rotationskörper (200) in der Rotationsrichtung elastisch miteinander zu verbinden, und
einen dynamischen Schwingungsdämpfer (500), der ein Paar von Massenkörpern (501, 502) umfasst, die mit dem Paar von Zwischengliedern (300) dazwischen positioniert angeordnet sind, und an einer in einer radialen Richtung äußeren Seite des zweiten Rotationskörpers (200) angeordnet ist,
wobei die Dämpfervorrichtung **dadurch gekennzeichnet ist, dass** der erste Rotationskörper (100) ein Paar von Plattengliedern (100A, 100B) und einen Abstandhalter (101) umfasst, der zwischen dem Paar von Plattengliedern (100A, 100B) aufgenommen ist und einen Außendurchmesser an einer radialen Position aufweist, wo der dynamische Schwingungsdämpfer (500) bereitgestellt ist, und
der Abstandhalter (101) einen ersten Anschlag (130) aufweist, der ausgebildet ist, um Rotation des zweiten Rotationskörpers (200) zu begrenzen.

2. Dämpfervorrichtung (10) nach Anspruch 1, wobei
ein Außendurchmesser von mindestens einem von dem Paar von Zwischengliedern (300) größer ausgelegt ist als ein Außendurchmesser des elastischen Mechanismus (400), und
das Paar von Massenkörpern (501, 502) an einer Position angeordnet ist, die einem äußeren Umfangsende von mindestens einem von dem Paar von Zwischengliedern (300) zugewandt ist.

3. Dämpfervorrichtung (10) nach Anspruch 1 oder 2, wobei
mindestens eines von dem Paar von Zwischengliedern (300) durch den zweiten Rotationskörper (200) über eine Buchse (600) in einer beliebigen oder beiden von der axialen Richtung und der radialen Richtung gelagert ist.

4. Dämpfervorrichtung (10) nach einem beliebigen der Ansprüche 1 bis 3, wobei
das Paar von Zwischengliedern (300) an einer Innenseite einer Position, die dem ersten elastischen Körper (410) oder dem zweiten elastischen Körper (420) in der radialen Richtung zugewandt ist, einstückig befestigt ist.

5. Dämpfervorrichtung (10) nach einem beliebigen der Ansprüche 1 bis 4, wobei
der elastische Mechanismus ferner ein Plattenglied (430, 430x, 430y) umfasst, das dazu ausgebildet ist, den ersten elastischen Körper (410) oder den zweiten elastischen Körper (420) zu lagern, und
das Plattenglied (430, 430x, 430y) eine erste Rille (432), die dazu ausgebildet ist, mindestens einen Abschnitt des zweiten Rotationskörpers (200) aufzunehmen, oder eine zweite Rille (434), die dazu ausgebildet ist, mindestens einen Abschnitt von mindestens einem von dem Paar von Zwischengliedern (300) aufzunehmen, aufweist.

6. Dämpfervorrichtung (10) nach einem beliebigen der Ansprüche 1 bis 5, wobei
der erste Rotationskörper (100) einen Entnahmeabschnitt (120) aufweist, der von einem äußeren Umfangsende des ersten Rotationskörpers (100) über mindestens eines von dem Paar von Zwischengliedern (300) zu einer in der radialen Richtung äußeren Seite vorragt.

## Revendications

1. Dispositif d'amortisseur (10) comprenant :
un premier corps rotatif (100) ;
un second corps rotatif (200) configuré pour tourner, de manière coaxiale, avec le premier corps rotatif (100) ;
une paire d'éléments intermédiaires (300) configurés pour tourner, de manière coaxiale, avec le premier corps rotatif (100) et le second corps rotatif (200) et disposés avec le second corps rotatif (200) intercalé entre eux dans une direction axiale ;
un mécanisme élastique (400) comprenant un premier corps élastique (410) configuré pour interconnecter, de manière élastique, le premier corps rotatif (100) et au moins l'un de la paire d'éléments intermédiaires (300) dans une direction de rotation et un second corps élastique (420) configuré pour interconnecter, de manière élastique, au moins l'un de la paire d'éléments intermédiaires (300) et le second corps rotatif (200) dans la direction de rotation ; et
un absorbeur de vibration dynamique (500) comprenant une paire de corps de masse (501, 502) agencés avec la paire d'éléments intermédiaires (300) intercalée entre eux, et positionné au niveau d'un côté externe du second corps rotatif (200) dans une direction radiale,
le dispositif d'amortisseur étant **caractérisé en ce que** le premier corps rotatif (100) comprend une paire d'éléments de plaque (100A, 100B) et un dispositif d'espacement (101) logé entre la paire d'éléments de plaque (100A, 100B) et ayant un diamètre externe au niveau d'une position radiale où l'absorbeur de vibration dynamique (500) est prévu, et
le dispositif d'espacement (101) a une première butée (130) configurée pour limiter la rotation du second corps rotatif (200).

2. Dispositif d'amortisseur (10) selon la revendication 1, dans lequel :
un diamètre externe d'au moins l'un de la paire d'éléments intermédiaires (300) est supérieur à un diamètre externe du mécanisme élastique (400), et
la paire de corps de masse (501, 502) sont disposés dans une position faisant face à une extrémité périphérique externe d'au moins l'un de la paire d'éléments intermédiaires (300).

3. Dispositif d'amortisseur (10) selon la revendication 1 ou 2, dans lequel :
au moins l'un de la paire d'éléments intermédiaires (300) est supporté par le second corps rotatif (200) via une douille (600) dans l'une quelconque ou les deux parmi la direction axiale et la direction radiale.

4. Dispositif d'amortisseur (10) selon l'une quelconque des revendications 1 à 3, dans lequel :
la paire d'éléments intermédiaires (300) sont fixés, de manière solidaire, au niveau d'un côté interne d'une position faisant face au premier corps élastique (410) ou au second corps élastique (420) dans la direction radiale.

5. Dispositif d'amortisseur (10) selon l'une quelconque des revendications 1 à 4, dans lequel :
le mécanisme élastique comprend en outre un élément de feuille (430, 430x, 430y) configuré pour supporter le premier corps élastique (410) ou le second corps élastique (420), et
l'élément de feuille (430, 430x, 430y) a une première rainure (432) configurée pour loger au moins une partie du second corps rotatif (200) ou une seconde rainure (434) configurée pour loger au moins une partie d'au moins l'un parmi la paire d'éléments intermédiaires (300).

6. Dispositif d'amortisseur (10) selon l'une quelconque des revendications 1 à 5, dans lequel :
le premier corps rotatif (100) a une partie de sortie (120) qui fait faire saillie au niveau d'au moins l'un de la paire d'éléments intermédiaires (300) d'une extrémité périphérique externe du premier corps rotatif (100) a un côté externe dans la direction radiale.
